# EUROPÄISCHE PATENTANMELDUNG

(11) **EP 0 790 571 A2**
(43) Veröffentlichungstag der Anmeldung: **20.08.1997**
(21) Anmeldenummer: 97102169.6
(22) Anmeldetag: 12.02.1997
(51) Int. Cl.: G06K 7/10

(54) **Laser/Abtaster für Streifencode**

(30) Priorität: 16.02.1996 DE 19605733
(71) Anmelder: Höft & Wessel GmbH, 30659 Hannover (DE)
(72) Erfinder: Köhler, Norbert, 30449 Hannover (DE); Börke, Joachim, Auhagen (DE)
(74) Vertreter: Junius, Walther, Dr.

(57) **Zusammenfassung**

Die Erfindung betrifft einen Barcode-Laserscanner, bestehend aus einer Laserdiode als Lichtquelle, einem mechanisch bewegten Spiegel, einer beweglichen Spiegelhalterung und einer Antriebsvorrichtung für die Spiegelbewegung, die in oder an einem Gehäuse untergebracht sind, welches mit einem Austrittsfenster versehen ist, sowie aus einer Lesevorrichtung. Es ist die Aufgabe der Erfindung, mit einfachen Mitteln einen Spiegelträger mit Schwingantrieb in Miniaturausführung zu schaffen, der sich auch durch geringen Energieverbrauch, geringen Verschleiß seiner Bauteile und hohe Lebensdauer auszeichnet. Die Erfindung besteht darin, daß die Antriebsvorrichtung für die Spiegelhalterung aus drei Magneten besteht, und zwar aus zwei Magneten, die im Gehäuse fest gelagert sind, von denen der eine Magnet ein statisches Magnetfeld erzeugt und der zweite Magnet ein das statische Magnetfeld überlagerndes Wechselfeld erzeugt, und dem dritten Magneten, der auf der beweglichen Spiegelhalterung befestigt ist und dieser die von den beiden anderen Magneten vorgegebene Bewegung aufzwingt, und daß die Spiegelhalterung aus einem um eine Achse verschwenkbaren Körper besteht, der außer dem Spiegel den dritten Magneten trägt, der im Magnetfeld der beiden anderen Magneten liegt. Dieser Barcode-Laserscanner läßt sich in Miniaturausführung herstellen.

## Beschreibung

Die Erfindung betrifft einen Barcode-Laserscanner, bestehend aus einer Laserdiode als Lichtquelle, einem mechanisch bewegten Spiegel, einer beweglichen Spiegelhalterung und einer Antriebsvorrichtung für die Spiegelbewegung, die in oder an einem Gehäuse untergebracht sind, welches mit einem Austrittsfenster versehen ist, sowie aus einer Lesevorrichtung.

Derartige Barcode-Laserscanner sind bekannt. Sie werden eingesetzt zum Lesen von Punkt- und Strichkodes, wie sie sich beispielsweise auf Warenetiketten, Warenverpackungen, Transportkästen und ähnlichen Gegenständen befinden. Neben diesen Barcode-Laserscannern gibt es auch andere Lesegeräte für Barcodes, z.B. die CCD Matrixkamera und die CCD-Zeilenkamera. Alle diese Geräte sind an sich handliche Geräte, werden sie doch z.B. im Ein-zelhandel auch als in die Hand zu nehmende und daher mit einem Handgriff, der einen Teil der Bestandteile aufnimmt, ausgestattete Scanner benutzt.

Ein wichtiger Bestandteil der Barcode-Laserscanner sind der Spiegel und die ihn bewegende Antriebsvorrichtung. Sie dienen dazu, den Laserstrahl mit einer bestimmten Frequenz so zu verschwenken, daß er über die gesamte Breite des Kodes hinüberstreicht. Für das Verschwenken des Laserstrahles benutzt man bisher einen an seiner Außenseite mit spiegelnden Flächen ausgestatteten Polygonkörper, der durch einen Antrieb in Rotation versetzt ist oder einen einen einzelnen Spiegel tragenden schwingenden Arm, der zumeist als Blattfeder ausgebildet ist und zu Schwingungen erregt ist.

Der Polygonspiegel und ebenso der den Spiegel tragende Arm sind zusammen mit ihrem Antrieb Bauteile, die durch ihre Größe die äußeren Dimensionen des Barcode-Laserscanners bestimmen. Bestimmte technische Anwendungen erfordern Barcode-Laserscanner in Miniaturausführung, die sich mit den bisher benutzten Spiegelträgern und deren Antrieb nicht realisieren lassen.

Die Erfindung vermeidet die Nachteile des Standes der Technik. Es ist die Aufgabe der Erfindung, mit einfachen Mitteln einen Spiegelträger mit Schwingantrieb in Miniaturausführung zu schaffen, der sich auch durch geringen Energieverbrauch, geringen Verschleiß seiner Bauteile und hohe Lebensdauer auszeichnet.

Die Erfindung besteht darin, daß die Antriebsvorrichtung für die Spiegelhalterung aus drei Magneten besteht, und zwar aus zwei Magneten, die im Gehäuse fest gelagert sind, von denen der eine Magnet ein statisches Magnetfeld erzeugt und der zweite Magnet ein das statische Magnetfeld überlagerndes Wechselfeld erzeugt, und dem dritten Magneten, der auf der beweglichen Spiegelhalterung befestigt ist und dieser die von den beiden anderen Magneten vorgegebene Bewegung aufzwingt, und daß die Spiegelhalterung aus einem um eine Achse verschwenkbaren Körper besteht, der außer dem Spiegel den dritten Magneten trägt, der im Magnetfeld der beiden anderen Magneten liegt.

Dieser Barcode-Laserscanner läßt sich in Miniaturausführung herstellen, weil sich der Spiegelträger und die seine Bewegung hervorrufenden Magnete sich in sehr kleiner Bauform herstellen lassen. Dabei zeichnen sich diese Bauteile durch hohe Verschleißfestigkeit und Robustheit aus. Durch die erzeugten Magnetfelder läßt sich der Spiegelträger hochgenau in die beabsichtigte Position bringen, sein äußerst geringes Gewicht läßt die gewünschten Bewegungen und Winkeleinstellungen des Spiegelträgers nahezu trägheitslos erreichen.

Dieser als Spiegelhalterung dienende, um eine Achse verschwenkbare Körper kann als ein um eine Achse verschwenkbarer doppelarmiger Hebel ausgeführt sein, der mit seinem einen Arm den Spiegel trägt oder dessen einer Arm durch den Spiegel gebildet ist und dessen anderer Arm den Magneten trägt oder durch diesen gebildet ist.

Bei diesem Barcode-Laserscanner ist es zweckmäßig, wenn die Achse der Spiegelhalterung im Gehäuse fest gelagert ist.

Auch ist es bei diesem Barcode-Laserscanner zweckmäßig, wenn die Lichtquelle, vorzugsweise eine Laserdiode, am Gehäuse auswechselbar angesteckt ist.

Für die Erzeugung der Spiegelbewegung ist es vorteilhaft, wenn die geometrischen Achsen der im Gehäuse befestigten Magnete senkrecht zueinander stehen.

Diese im Gehäuse befestigten Magnete sind zweckmäßigerweise Elektromagnete, obwohl der das statische Feld erzeugende Magnet auch ein Permanentmagnet sein kann.

Aus Gründen einer möglichst kleinen Bauform ist es zweckmäßig, wenn die Spule des das statische Magnetfeld erzeugenden, im Gehäuse fest gelagerten Magneten um einen Eisenkern gewickelt ist.

Weiterhin ist es aus Gründen der Erzielung einer möglichst kleinen Bauform von Vorteil, wenn der Eisenkern mit der ihn umgebenden Wicklung im Innenraum des das magnetische Wechselfeld erzeugenden Magneten untergebracht ist.

Dieser Barcode-Laserscanner weist eine Schaltung für die Veränderung der Stärke des magnetischen Wechselfeldes auf.

Im Gehäuse ist zwischen der Laserdiode und dem Spiegel eine Optik angeordnet.

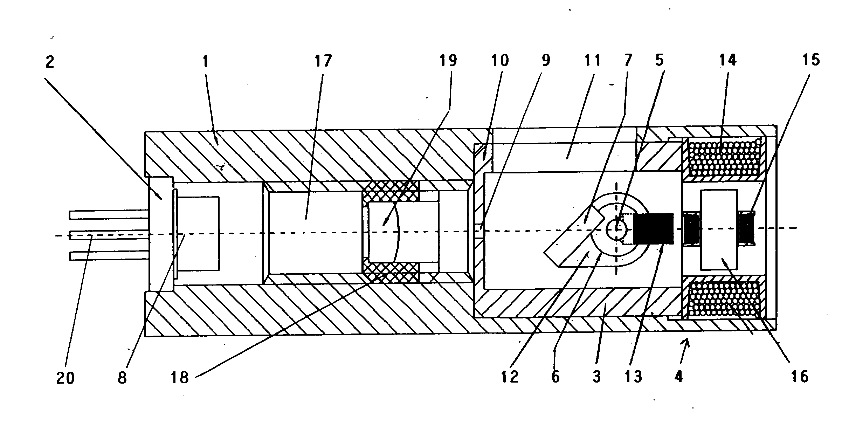

Das Wesen der Erfindung ist nachstehend anhand eines in der Zeichnung schematisch dargestellten Ausführungsbeispieles näher erläutert. Die Zeichnung zeigt einen Schnitt durch den Barcode-Laserscanner.

Der Barcode-Laserscanner besteht aus einem Gehäuse 1, in dessen Innenraum von der einen Seite die Laserdiode 2 und von der anderen Seite eine Kammer 3 sowie das Magnetsystem 4 eingeschoben und befestigt sind.

In der Kammer 3 ist eine Achse 5 befestigt, auf welcher die Halterung 6 für den Spiegel 7 verschwenkbar gelagert ist. In der optischen Achse 8 der Laserdiode 2 weist die Kammer 3 eine Lichteintrittsöffnung 9 auf, in ihrer Seitenwand 10 weist die Kammer 3 eine Lichtaustrittsöffnung 11 für das vom Spiegel 7 reflektierte Licht der Laserdiode 2 auf. Die Halterung 6 für den Spiegel 7 ist in Form eines zweiarmigen Hebels gestaltet, der eine Arm 12 trägt den Spiegel 7, der andere Arm ist durch den Permanentmagneten 13 gebildet. Dieser überträgt die vom Magnetsystem 4 ausgehende magnetisch übertragene Bewegungsenergie auf die Halterung 6 für den Spiegel 7.

Das Magnetsystem 4 ist durch eine äußere Spule 14 sowie durch eine weitere, im Innenraum der äußeren Spule 14 angeordnete innere Spule 15, die einen Eisenkern 16 umgibt, gebildet. Diese zwei Spulen 14,15, die im Gehäuse fest gelagert sind, bilden zusammen mit dem Eisenkern 16 zwei Magneten,von denen der eine Magnet ein statisches Magnetfeld erzeugt und der zweite Magnet ein das statische Magnetfeld überlagerndes Wechselfeld erzeugt. Diese Magnetfelder wirken auf den dritten, an der Spiegelhalterung 6 fest angebrachten Magneten 13. Dieser Barcode-Laserscanner läßt sich in Miniaturausführung herstellen, weil sich der Spiegelträger 6 und die seine Bewegung hervorrufenden Magnete 13,14,15 sich in sehr kleiner Bauform herstellen lassen. Dabei zeichnen sich diese Bauteile durch hohe Verschleißfestigkeit und Robustheit aus. Durch die erzeugten Magnetfelder läßt sich die Spiegelhalterung hochgenau in die beabsichtigte Position bringen, sein äußerst geringes Gewicht läßt die gewünschten Bewegungen und Winkeleinstellungen des Spiegelträgers 6 nahezu trägheitslos erreichen.

Für die Erzeugung der Spiegelbewegung ist es vorteilhaft, wenn die geometrischen Achsen der im Gehäuse 1 befestigten Magnete 14.15 senkrecht zueinander stehen und die Achse der Spiegelhalterung 6 in der optischen Achse 8 quer zu dieser liegt

Die im Gehäuse 1 befestigten Magnete 14,15 sind zweckmäßigerweise Elektromagnete, obwohl der das statische Feld erzeugende Magnet auch ein Permanentmagnet sein kann.

Aus Gründen einer möglichst kleinen Bauform ist es zweckmäßig, wenn die Spule 15 des das statische Magnetfeld erzeugenden, im Gehäuse 1 fest gelagerten Magneten um den Eisenkern 16 gewickelt ist. Weiterhin ist es aus Gründen der Erzielung einer möglichst kleinen Bauform von Vorteil, wenn der Eisenkern 16 mit der ihn umgebenden Wicklung 15 im Innenraum des das magnetische Wechselfeld erzeugenden Magneten untergebracht ist.

Im Gehäuse 1 ist zwischen der Laserdiode 2 und dem Spiegel 7 eine Optik 17 angeordnet. Diese besteht aus dem in das Gehäuse 1 eingeschobenen Tubus 18 und der Linse 19.

Das Gehäuse der Laserdiode 2 kann auch einen Lichtempfänger 20 aufnehmen, der vom Barcode reflektiertes Licht empfängt und der Auswertung in einer Auswertungsschaltung zuführt, die durch einen Komputer gebildet sein kann.

So kann die im Gehäuse der Laserdiode vorhandene Fotodiode neben der Regelung der Laserleistung auch vom Barcode reflektiertes Licht empfangen, in elektrische Signale wandeln und der Auswertung zuführen.

## Patentansprüche

1. Barcode-Laserscanner,
bestehend aus einem Laser als Lichtquelle, einem mechanisch bewegten Spiegel, einer beweglichen Spiegelhalterung und einer Antriebsvorrichtung für die Spiegelbewegung, die in oder an einem Gehäuse untergebrcht sind, welches mit einem Austrittsfenster versehen ist, sowie aus einer Lesevorrichtung,
dadurch gekennzeichnet,
daß die Antriebsvorrichtung für die Halterung (6) des Spiegels (7) aus drei Magneten (13,14,15) besteht, und zwar aus zwei Magneten (14,15), die im Gehäuse (1) fest gelagert sind, von denen der eine Magnet (15) ein statisches Magnetfeld erzeugt und der zweite Magnet (14) ein das statische Magnetfeld überlagerndes Wechselfeld erzeugt, und dem dritten Magneten (13), der auf der beweglichen Halterung (6) des Spiegels (7) befestigt ist,
und daß die Halterung (6) des Spiegels (7) aus einem um eine Achse (5) verschwenkbaren Körper besteht, der außer dem Spiegel (7) den dritten Magneten (13) trägt, der im Magnetfeld der beiden anderen Magneten (14,15) liegt.

2. Barcode-Laserscanner nach Anspruch 1,
dadurch gekennzeichnet,
daß die Halterung (6) des Spiegels (7) ein um eine Achse (5) verschwenkbarer doppelarmiger Hebel ist, der mit seinem einen Arm (12) den Spiegel (7) trägt und dessen anderer Arm den Magneten trägt oder durch diesen Magneten (13) gebildet ist.

3. Barcode-Laserscanner nach Anspruch 1,
dadurch gekennzeichnet,
daß die Achse (5) der Halterung (6) des Spiegels (7) im Gehäuse (1) fest gelagert ist.

4. Barcode-Laserscanner nach Anspruch 1,
dadurch gekennzeichnet,
daß die Laserdiode (2) am Gehäuse (1) auswechselbar angesteckt ist.

5. Barcode-Laserscanner nach Anspruch 1,
dadurch gekennzeichnet,
daß die geometrischen Achsen der die im Gehäuse (1) befestigten Magnete (14,15) senkrecht zueinander stehen.

6. Barcode-Laserscanner nach Anspruch 1,
dadurch gekennzeichnet,
daß die im Gehäuse (1) befestigten Magnete (14,15) Elektromagnete sind.

7. Barcode-Laserscanner nach Anspruch 1,
dadurch gekennzeichnet,
daß die Spule des das statische Magnetfeld erzeugenden, im Gehäuse (1) fest gelagerten Magneten (15) um einen Eisenkern (16) gewickelt ist.

8. Barcode-Laserscanner nach Anspruch 1,
dadurch gekennzeichnet,
daß der Eisenkern (16) mit der ihn umgebenden Wicklung des Magneten (15) im Innenraum des das magnetische Wechselfeld erzeugenden Magneten (14) untergebracht ist.

9. Barcode-Laserscanner nach Anspruch 1,
dadurch gekennzeichnet,
daß eine Schaltung für die Veränderung der Stärke des magnetischen Wechselfeldes vorgesehen ist.

10. Barcode-Laserscanner nach Anspruch 1,
dadurch gekennzeichnet,
daß im Gehäuse (1) zwischen der Laserdiode (2) und dem Spiegel (7) eine Optik (17) angeordnet ist.
